# EUROPÄISCHE PATENTSCHRIFT

(11) **EP 2 728 241 B1**
(45) Veröffentlichungstag und Bekanntmachung des Hinweises auf die Patenterteilung: **03.02.2016**
(21) Anmeldenummer: 12191298.4
(22) Anmeldetag: 05.11.2012
(51) Int. Cl.: F17C 5/00, F17C 13/04, B60K 15/04

(54) **Tankstutzeneinheit mit Sperrventil**
Tank support unit with sealing valve
Unité de manchon de citerne avec clapet antiretour

(43) Veröffentlichungstag der Anmeldung: 07.05.2014
(73) Patentinhaber: Magna Steyr Fahrzeugtechnik AG & Co KG, 8041 Graz (AT)
(72) Erfinder: Esl, Oliver, 8010 Graz (AT); Mayr, Franz, 8323 St.Marein bei Graz (AT)
(74) Vertreter: Zangger, Bernd

(56) Entgegenhaltungen:
- EP-A1- 1 070 908
- WO-A1-03/029719
- DE-T2- 60 013 383
- DE-T2- 69 200 463
- GB-A- 2 053 437
- US-A1- 2004 084 091

## Beschreibung

### Gebiet der Erfindung

Die vorliegende Erfindung betrifft eine Tankstutzeneinheit für ein Fahrzeug sowie ein Tanksystem mit einer Tankstutzeneinheit.

### Stand der Technik

Erfindungsgemäße Vorrichtungen können beispielsweise in Verbindung mit Tanks oder Druckspeichersystemen von Fahrzeugen eingesetzt werden, um bei einem Tank- oder Befüllvorgang ein Überfüllen einzelner Druckspeicherbehälter mit Kraftstoff zu verhindern. Dafür sind unterschiedliche Anordnungen von Druckspeicherbehältern und Ventilen, sowie Verfahren zu deren Betrieb bekannt, siehe z.B. WO 03/029719.

Derzeit werden automotive Drucktanksysteme vor dem Betanken von einer Zapfeinrichtung einer Tankstelle hinsichtlich Druckniveau bzw. Dichtheit überprüft und dann entsprechend befüllt. Es sind Drucke bis 10 bar bei Flüssiggassystemen, 200 bis 300 bar bei Erdgassystemen und 200 bis 700 bar bei Wasserstoffsystemen als Fülldruck üblich.

Für mit Wasserstoff betriebene Fahrzeuge werden an Tankstellen derzeit 350 und 700 bar angeboten. Die unterschiedlichen Druckniveaus der Drucksysteme in Fahrzeugen werden durch Tankstutzen unterschiedlicher Länge dargestellt. Die Länge der Tankstutzen ist so ausgeführt, dass mit einem für 350 bar ausgerüsteten Fahrzeug an einer 700bar Tankstelle nicht getankt werden kann. Jedoch aber umgekehrt. 700 bar Tanksysteme werden bis 875 bar ausgelegt, um keine Schädigung durch thermisch bedingten Überdruck bzw. durch Druckstöße (vor allem am Beginn des Tankvorganges) zu erhalten. Bei mehreren Herstellern ist die Tank- und Ventilanordnung so, dass die Befüllleitung direkt in einen Ventilblock bzw. parallel oder in Serie in mehrere Ventilblöcke angeschlossen ist und das Gas erst durch diese Ventilblöcke in den bzw. die Speicher strömt. Dabei werden immer wieder Ventile, Ventilsitze und Dichtungen beschädigt bzw. kommt es zu Anregungen, die einzelne Komponenten im Ventilblock zum Schwingen bringen.

Für erdgasbetriebene Kraftfahrzeuge gibt es derzeit eine Vielzahl an unterschiedlichen Betankungsanschlüssen, die abhängig sind von der Art des Kraftfahrzeuges (PKW, Bus, LKW) und dem Land. (z.B. ACME-, Bajonett- oder Dish-Anschluss). Geplant ist ein für Europa einheitlicher Euronozzle.

Durch die relativ geringen Reichweiten von rein gasbetriebenen Fahrzeugen wird bei Fülldrucken für CNG und Mischgas (z.B. CNG und H2) eine Anhebung des Druckniveaus in Europa überlegt. Dies würde bedeuten, dass es zusätzlich zu den derzeit üblichen 200 bar Tanksystemen, künftig 248 bzw. eventuell 300 bar CNG-Systeme und Zapfeinrichtungen an Tankstellen geben wird. In USA liegt der zulässige Betriebsdruck für CNG-Systeme bei 248 bar.

Beim Betanken mit Erdgas ist aber auch in Europa ein Druckniveau von z.B. 260 bar in einem 200 bar CNG Tanksystem in einem Kraftfahrzeug erreichbar, da beim Betankungsbeginn ein Druckstoß zur Feststellung von Undichtigkeiten und des aktuellen Druckniveaus im Speichersystem erfolgt und der Druckspeicherbehälter im Fahrzeug durch mehrmals wiederholte Betankungsstarts somit bis zu einem Maximaldruck der Zapfeinrichtung (260 bis 265 bar bei CNG) gefüllt werden kann. Dies bedeutet eine 30%ige Überschreitung des zulässigen Betriebsdruckes von 200 bar. Um eine Sicherheitsgefährdung zu vermeiden, müssen Tanksysteme von Kraftfahrzeugen bereits jetzt für 265 bar ausgelegt sein.

Tankstellen haben unterschiedlich funktionierende bzw. nicht funktionierende Überwachungssysteme zur Leckage- und Drucküberwachung und Abschaltung des Betankungsvorganges. Zapfeinrichtungen an Tankstellen zeigten für CNG üblicherweise die Betankungsmenge, oft aber keinen Druck an.

Die US 5474104 A offenbart einen Tankabsperrventilaufbau, der ein schnelles, wirkungsvolles und sicheres Betanken von mit komprimiertem Erdgas angetriebenen Fahrzeugen ermöglicht. Der Tanksperrventilaufbau erlaubt auch das Entspannen des Fahrzeugtreibstoffsystems vor seinem Warten und seiner Pflege. Der Tankabsperrventilaufbau weist eine Aufnahme auf, die geeignet ist, mit einer Zapfeinrichtung einer Tankstelle zusammenzupassen, und weist einen Ventilkörper mit ersten und zweiten Gasflussdurchgängen auf. Die entsprechenden ersten Enden der ersten und zweiten Gasflussdurchgänge stehen mit der Aufnahme in Verbindung, während die entsprechenden zweiten Enden der ersten und zweiten Gasflussdurchgänge über eine Treibstoffversorgungsleitung mit einem Gasspeichergefäss in Verbindung stehen. Das Absperrventil ist in dem ersten Gasflussdurchgang des Ventilkörpers positioniert und normalerweise in eine geschlossene Position vorgespannt, um einen Gasfluss durch den ersten Gasflussdurchgang zu verhindern. Das Absperrventil öffnet als Antwort auf einen Treibstofffluss unter Druck, indem es den Gasfluss zu dem Treibstoffspeichergefäß erlaubt.

In einer bevorzugten Ausführungsform weist der in der US 5474104 A offenbarte Tankabsperrventilaufbau ferner ein Bypassventil in dem zweiten Gasflussdurchgang in dem Ventilkörper auf. Das Bypassventil befindet sich normalerweise in einer geschlossenen Position, in der es den Gasfluss durch den zweiten Gasflussdurchgang blockiert. Falls Wartung oder Ersetzen eines oder mehrerer Teile des Aufbaus erforderlich wird, kann das Bypassventil geöffnet werden, um einen Gasfluss von dem Gasspeichergefäß zurück durch die Aufnahme zu erlauben, um das Treibstoffsystem eines Fahrzeuges vor der Wartung zu entleeren. Die beschriebene Aufnahme kann auch einen Filter aufweisen, um Partikel aus dem Treibstoff zu entfernen. Aufgrund der Positionierung des Absperrventils innerhalb des Ventilkörpers befindet sich die Aufnahme nicht unter Druck und kann leicht zur Wartung oder Erneuerung des Filters entfernt werden. Der beschriebene Tanksperrventilaufbau weist aber keinerlei Einrichtung zur Begrenzung des Druckes im Druckspeichersystem auf.

Die EP 1 561 991 B1 beschreibt ein Aufnahmeelement einer Schnellkupplung sowie eine Schnellkupplung für die lösbare Verbindung von zwei unter Druck stehenden Fluidleitungen sowie eine Anlage zur Füllung von Behältern von Automobilen mit unter Druck stehendem Gas, die ein solches Aufnahmeelement umfasst. In diesem Sinne offenbart die EP 1 561 991 B1 eine Schnellkupplung für die lösbare Verbindung von zwei von einem unter Druck stehenden Fluid durchströmten Leitungen, wobei diese Kupplung ein Einsteckelement und ein Aufnahmeelement umfasst, die geeignet sind, axial ineinandergesteckt zu werden, wobei das Einsteckelement mit einer Dichtung ausgerüstet ist, die in einer Aufnahme angeordnet ist, die in der Innenfläche des Körpers dieses Elementes eingearbeitet ist, während das Aufnahmeelement mit einem Verschlussventil versehen ist, dadurch gekennzeichnet, dass das Ventil durch eine von der Dichtung des Einsteckelementes ausgeübten Reaktionskraft offengesteuert wird, wobei diese Kraft aus dem Abstützen des Ventils an der Dichtung in Folge des Ineinandergreifens des Einsteckelementes und des Aufnahmeelementes resultiert. Somit ist das Aufnahmeelement durch Verschiebung seines Ventils nur aufgrund der Interaktion zwischen diesem mit der Dichtung eines Einsteckelementes offen. In vorteilhafter Weise führt das Ineinandergreifen des Einsteck- und des Aufnahmeelementes in Abwesenheit der Dichtung in der Aufnahme des Einsteckelementes nicht zu einer Verschiebung des Ventils in Öffnungsrichtung.

Insbesondere wird ein Schnellkupplungs-Aufnahmeelement offenbart, das zu einer solchen Kupplung gehört, sowie ein Schnellkupplungs-Aufnahmeelement, das mit einem Verschlussventil versehen ist, wobei dieses Ventil durch eine von einer Dichtung ausgeübte Reaktionskraft offengesteuert wird, wobei die Dichtung in einem Innenaufnahmeraum des Körpers eines Kupplungseinsteckelementes angeordnet ist, das geeignet ist, in das Aufnahmeelement eingesteckt zu werden, wobei die Kraft aus dem Abstützen einer Außenumfangsschräge oder einer Übergangszone zwischen der Stirnfläche und einer radialen Außenfläche des Ventils in Folge des Ineinandergreifens des Einsteckelementes und des Aufnahmeelementes resultiert.

Die EP 2 122 222 B1 beschreibt ein Aufnahme- oder Einsteckelement einer Kupplung die zur lösbaren Verbindung von unter Druck stehenden, von einem Fluid durchströmten Leitungen dient, wobei jedes Verbindungsstück über seine gesamte Länge einen konstanten Querschnitt aufweist.

Die EP 1 561 991 B1 und EP 2 122 222 B1 stehen stellvertretend für eine Anzahl von bekannten Vorrichtungen und technischen Lösungen für das Problem der sicheren mechanischen Kodierung zwischen Zapfeinrichtung (Zapfpistole) der Tankstelle und Tankstutzen am Kraftfahrzeug. Auch Probleme wie geringes Totvolumen der Kupplung und vorteilhafte Ausführungsformen der oft integrierten Rückschlagventile werden angesprochen. Allerdings weisen die im Stand der Technik bekannten Lösungen keine zuverlässigen Einrichtungen zur Begrenzung des Druckes in einem Tanksystem auf.

Um die Vielzahl der Tankstutzen und Anschlüsse an Zapfeinrichtungen von Tankstellen zu verringern und die Betriebssicherheit zu erhöhen, wird eine Tankstutzeneinheit vorgeschlagen, die nicht nur für unterschiedliche geographische Regionen einsetzbar ist, sondern auch den Fülldruck entsprechend dem zulässigen Betriebsdruck eines Tanksystems begrenzt.

Bei den genannten Anwendungen ist es erwünscht, dass ein zulässiger Betriebsdruck eines Druckspeicherbehälters oder eines Tanksystems im Verlauf eines Befüllvorganges zuverlässig eingehalten und so höchste Betriebssicherheit gewährleistet wird. Der Befüllvorgang soll möglichst schnell und mit nur geringen Energieverlusten durchführbar sein. Verschleiß an Ventilkomponenten soll gering gehalten und Beschädigungen an Druckspeicherbehältern und Druckleitungen sollen verhindert werden.

Es ist derzeit verboten an Tankstellen zu tanken, deren Betankungsdruck (Zapfdruck) den maximalen Arbeitsdruck der in einem Fahrzeug verbauten Druckspeicherbehälter übersteigt.

Es ist eine Aufgabe der Erfindung, Tanksysteme für Fahrzeuge in dieser Hinsicht zu verbessern. Es ist eine weitere Aufgabe der Erfindung Tankstutzeneinheiten und kombinierte Ventilanordnungen anzugeben die, zum Teil auch ohne Verwendung elektrischer und elektronischer Komponenten, die Sicherheit beim Betanken von Tanksystemen erhöhen.

### Zusammenfassung der Erfindung

Die Lösung der Aufgaben erfolgt durch eine Tankstutzeneinheit für ein Fahrzeug, umfassend einen Tankstutzen, einen Durchflussweg und ein Rückschlagventil, wobei der Tankstutzen für einen vorgegebenen Maximaldruck eingerichtet ist der höher ist als ein zulässiger Betriebsdruck eines im Fahrzeug angeordneten Druckspeichersystems und die Tankstutzeneinheit ein Sperrventil aufweist, wobei das Sperrventil im Durchflussweg zwischen dem Tankstutzen und einem Auslassbereich der Tankstutzeneinheit angeordnet ist und dazu eingerichtet ist, das im Fahrzeug angeordnete Druckspeichersystem gegen Druckanstieg über seinen zulässigen Betriebsdruck hinaus zu schützen.

Ein Druckspeichersystem umfasst in diesem Kontext zumindest einen Druckspeicherbehälter, Druckleitungen und andere der Tankstutzeneinheit nachgeschaltet im Fahrzeug angeordnete und mit dem als Kraftstoff verwendeten Medium in Kontakt kommende Komponenten. Das Sperrventil ist im Normalzustand, d.h. ohne Druck in der Zuleitung und ohne laufenden Betankungsvorgang, bevorzugt offen, um dem beim Betankungsvorgang einströmenden Medium möglichst geringen Flusswiderstand entgegen zu setzen. Der gesamte Durchflussweg der Tankstutzeneinheit wird nur durch ein unmittelbar nach dem Tankstutzen im Durchflussweg angeordnetes Rückschlagventil verschlossen. Das Sperrventil ist dazu eingerichtet, bei Anstieg des Druckes in seinem, dem Druckspeichersystem des Fahrzeuges zugewandten, Auslassbereich den Durchflussweg der Tankstutzeneinheit bei Erreichen eines Sperrdruckes reversibel zu verschließen und so das im Fahrzeug angeordnete Druckspeichersystem gegen Druckanstieg über seinen zulässigen Betriebsdruck hinaus zu schützen. Dadurch wird schnelles und sicheres Betanken ermöglicht.

Die Lösung der Aufgaben erfolgt auch durch ein Tanksystem für ein Fahrzeug umfassend eine Tankstutzeneinheit, Druckleitungen und zumindest einen Druckspeicherbehälter.

Durch die Anwendung von rein mechanisch einen festgelegten Sperrdruck überwachenden Einrichtungen, wobei diese Einrichtungen dauerhaft mit Teilbereichen eines Druckspeichersystems wirkverbunden sind, ergibt sich eine hohe Sicherheit gegen Fehlbetankung und wirksamer Schutz gegen unzulässigen Druckanstieg im Tanksystem. Rein elektronisch überwachende Systeme können durch fehlerhafte Druckmessungen und/oder Schaltvorgänge an elektromagnetischen Ventilen gefährliche Zustände im Tanksystem herbeiführen. Mechanische und elektrische/elektronische Komponenten werden in erfindungsgemäßen Tanksystemen bevorzugt auch gemeinsam als zusätzliche Sicherungseinrichtungen eingesetzt.

Bevorzugt weist der Tankstutzen mechanische Dimensionen und/oder andere Kodierungen auf, sodass der Tankstutzen mit allen Zapfeinrichtungen verbindbar ist die Kraftstoff/Medium bis zu einem höchsten an Tankstellen verfügbaren Zapfdruck (in Zukunft beispielsweise 700 oder 900 Bar) zur Verfügung stellen.

Weiterbildungen der Erfindung sind in den abhängigen Ansprüchen, der Beschreibung sowie den beigefügten Zeichnungen angegeben.

Eine bevorzugte, einem Druckspeichersystem mit einem bestimmten zulässigen Betriebsdruck vorgeschaltete und in einer Tankstutzeneinheit angeordnete Einrichtung mit einem durch den bestimmten zulässigen Betriebsdruck des Druckspeichersystems festgelegten Sperrdruck ist beispielsweise ein Sperrventil. Das Sperrventil weist ein Ventilgehäuse, eine Ventilkammer mit einer Zulauföffnung und einer dem Druckspeichersystem zugewandten Auslassöffnung, einen beweglichen Kolben, und zumindest eine Feder auf. Der Kolben weist zumindest einen axialen Verbindungskanal auf und ist durch zumindest zwei in der Ventilkammer angeordnete Dichtelemente axial beweglich geführt, wobei eine einem Einlassbereich der Ventilkammer zugewandte erste Kolbenwirkfläche des Kolbens und ein Dichtkörper oder ein Ventilgehäuse einen Ventilsitz bilden, und wobei durch Änderung des Druckes in einem an eine zweite Kolbenwirkfläche angrenzenden Speicherbereich der Ventilkammer der Kolben axial bewegbar ist und eine zwischen der Zulauföffnung und der Auslassöffnung angeordnete Durchlassöffnung reversibel verschlossen und geöffnet werden kann, wobei die Durchlassöffnung in drucklosem Zustand durch die Feder offen gehalten wird.

Es resultiert ein rein mechanisches Sperrventil, das aufgrund einer eingestellten Federkraft ab einem bestimmten Druck die Durchlassöffnung dicht verschließt und weder bei weiterer Druckzunahme oder Druckabnahme bis Unterdruck in der Zulauföffnung öffnet und somit immer verschlossen bleibt. Die Entnahme von Medium erfolgt an einer oder mehreren anderen Stellen im Druckspeichersystem.

Der erfinderische Vorteil dieses mechanischen Sperrventils liegt beim Befüllvorgang darin, dass ein nachgeschaltetes Druckspeichersystem nur den Druck erreicht der gewünscht ist und unabhängig vom Druck vor dem Sperrventil ist. Es bleibt ohne einen elektromagnetischen Aktuator immer sicher verschlossen und hält somit den Druck im nachgeschalteten Druckspeichersystem sicher und lässt eine weitere Druckzunahme durch nachströmendes Medium nicht zu. Ein weiterer Vorteil dieser Ventilausführung liegt darin, dass zwar bei Undichtigkeiten am Dichtsitz zwischen Kolben und Dichtkörper oder Ventilgehäuse das nachgeschaltete Druckspeichersystem einer nicht gewünschten Druckerhöhung ausgesetzt sein kann, wobei mit Zunahme des Druckes auf der Auslassseite die Anpresskraft des Kolbens auf den Dichtkörper oder das Ventilgehäuse zunimmt und somit die Undichtigkeit wieder verringert wird.

Besonders vorteilhaft wirkt sich aus, dass die Durchlassöffnung in drucklosem Zustand durch die Kraft der Feder offen gehalten wird. So kann das Medium bis zur Schlussphase des Tankvorganges ungehindert in das Druckspeichersystem strömen und schädliche Vibrationen im Bereich der Ventilkammer werden vermieden.

Eine besonders vorteilhafte Ausführungsform des Sperrventils ergibt sich, wenn die erste Kolbenwirkfläche und der Dichtkörper oder das Ventilgehäuse des Sperrventils so ausgebildet sind, dass in einer Schließposition des Kolbens eine Dichtwirkung an einer Dichtkante im Bereich des äußeren Randes der ersten Kolbenwirkfläche auftritt. Äußerer Rand bedeutet hier, von der Achse des Kolbens betrachtet, radial außen liegend. Der äußere Rand des Kolbens kann beispielsweise im Bereich der ersten Kolbenwirkfläche schräg gefast oder abgerundet sein. Auch kann die erste Kolbenwirkfläche am äußeren Rand einen erhöhten Wulst aufweisen, um die Dichtwirkung in diesem Bereich zu lokalisieren.

Dadurch wird bei Überschreiten eines Sperrdrucks bzw. bei Anstieg des Druckes über den Sperrdruck auf den Kolben keine Kraft mehr gegen die Schließrichtung des Kolbens ausgeübt. Der Sperrdruck und das Schließverhalten der erfindungsgemäßen Sperrventile werden somit unabhängig vom Druck in der Zulauföffnung. Außerdem kann bei geschlossenem Ventil auch bei einem Druckanstieg in der Zulauföffnung durch den Druck in der Zulauföffnung keine axiale Kraft auf den Kolben ausgeübt werden und das Sperrventil bleibt auch bei extremen Druckstößen sicher geschlossen. Es wird außerdem sichergestellt, dass die das Sperrventil und/oder die Drucksperrventileinheit auch dann geschlossen bleibt, wenn der Druck in der Zulauföffnung unter den Sperrdruck absinkt, bei dem der Kolben zuvor geschlossen hat, da die nun fortwährende Schließkraft im Wesentlichen nur durch den Druck im Speicherbereich der Ventilkammer auf die Kolbenwirkfläche abzüglich der Federkraft der Feder bestimmt wird.

Dadurch, dass die Zulauföffnung vorzugsweise radial außerhalb der Kolbenwirkfläche in den Einlassbereich der Ventilkammer mündet, wird zusätzlich sichergestellt, dass durch den Druck in der Zulauföffnung keine axiale Kraft auf den Kolben ausgeübt werden kann.

Der Sperrdruck des Sperrventils ist durch die Federkraft der Feder und die Kolbenwirkflächen bestimmt. Vorzugsweise ist die zweite Kolbenwirkfläche grösser ausgebildet als die erste Kolbenwirkfläche. Durch eine relativ größere zweite Kolbenwirkfläche ist es möglich kleinere Werte für den Sperrdruck der Sperrventile zu realisieren.

Bevorzugt ist der Kolben des Sperrventiles zylindrisch und weist an seiner Außenseite Gleitflächen in zumindest zwei Bereichen mit vorzugsweise unterschiedlichen Durchmessern auf.

Besonders bevorzugt sind die zumindest zwei Dichtelemente in entsprechenden Ausnehmungen im Ventilgehäuse angeordnet. Die kostengünstigste Variante wäre, die Dichtelemente in jeweils einer Nut im Kolben unterzubringen. In Nuten auf dem Kolben angeordnete Dichtelemente erweisen sich bei sehr hohen Drucken (200 bis 1000 Bar) als problematisch. In Abhängigkeit des Druckes wird eine variable Kraft auf den Kolben ausgeübt und beeinflusst daher den Sperrdruck des Sperrventiles. Durch die vorzugsweise Anordnung der Dichtungen in Ausnehmungen oder Nuten im Ventilgehäuse, insbesondere in zylindrischen Abschnitten der Ventilkammer erfolgt keine variable Krafteinwirkung auf den Kolben durch den Druck des Mediums - das Sperrventil und/oder die Drucksperrventileinheit bleiben zuverlässig geschlossen.

Der Dichtkörper und/oder der Kolben sind vorzugsweise aus einem elastisch verformbaren Material hergestellt. Durch eine den sehr hohen Drucken (200 bis 1000 Bar) angepasste Materialwahl wird die Dichtwirkung optimiert und Verschleiß am Ventilsitz vermieden. Besonders geeignete Materialien umfassen Kunststoffe wie PEEK und PAS oder keramische Werkstoffe wie Aluminiumoxid und Siliziumcarbid, aber auch Spezialstähle und andere Metalle. Die Sperrventile müssen keinen separaten Dichtkörper aufweisen. Möglich ist auch, dass der Kolben direkt gegen das Ventilgehäuse dichtet. Bevorzugte Materialkombinationen sind dem Fachmann geläufig.

Ein zwischen dem Einlassbereich und dem Speicherbereich der Ventilkammer angeordneter Entlastungsbereich der Ventilkammer weist vorzugsweise zwischen den zumindest zwei Dichtelementen eine Entlastungsöffnung auf. Dadurch kann bei Undichtigkeiten an einem der Dichtelemente austretendes Medium nicht zu einer Druckerhöhung im jeweils anderen Bereich der Ventilkammer führen.

Gemäß einer besonders bevorzugten Ausführungsform der Erfindung ist die Entlastungsöffnung mit einer Leitung zur Entsorgung von austretendem Medium verbunden. Dadurch kann gegebenenfalls austretendes (brennbares) Medium aus der unmittelbaren Umgebung der Sperrventile abtransportiert und an einer geeigneten Stelle ohne Gefahr für Fahrzeuginsassen bei niedrigem Druck weiterbehandelt werden.

In einer bevorzugten Ausführungsform ist der Sperrdruck der Sperrventile im Wesentlichen durch die Federkraft der Feder und die Kolbenwirkflächen bestimmt. Die Federkraft der Feder wird in Abstimmung mit den Kolbenwirkflächen so bemessen, dass bei ansteigendem Druck im Speicherbereich nach Überschreitung eines vorbestimmten Sperrdruckes der Sperrventile zuverlässig schließt und verschlossen bleibt. Die Reibung an den Dichtelementen spielt ebenfalls eine Rolle in der Bemessung der Federkraft.

In einer Ausführungsform ist die Federkraft der Feder über die Einschraubtiefe eines Deckels einstellbar. Dadurch können beispielsweise beim Zusammenbau Unterschiede in der Reibung zwischen Kolben und Dichtelementen, etwa bewirkt durch Fertigungstoleranzen, ausgeglichen werden.

In einer weiteren Ausführungsform des Sperrventiles sind Distanzhalter am Deckel des Ventilgehäuses oder entsprechende Freistellungen an der zweiten Kolbenwirkfläche des Kolbens vorgesehen. Dadurch wird eine gute Druckverteilung auf die zweite Kolbenwirkfläche des Kolbens erreicht.

In einer weiteren bevorzugten Ausführung der Tankstutzeneinheit umfasst diese ein Sperrventil und ein Überdruckventil, wobei diese Ventile vorzugsweise in einem gemeinsamen Ventilgehäuse angeordnet sind. In einer bevorzugten Ausführungsform des Sperrventiles ist das Überdruckventil, dessen Öffnungsdruck (knapp) über dem Sperrdruck des Sperrventils oder der Drucksperrventileinheit liegt, zwischen dem Speicherbereich und dem Entlastungsbereich der Ventilkammer angeordnet. In einer weiteren Ausführungsform ist das Überdruckventil im Kolben integriert angeordnet. Dadurch wird die Betriebssicherheit des Tanksystems erhöht. Da das Sperrventil im Tankstutzen ja verschlossen bleibt, würde eine zum Beispiel durch einen Brand verursachte Überhitzung des Mediums und ein damit verursachter Druckanstieg im Druckspeichersystem ohne ein derartiges Überdruckventil eine Zerstörung des Druckspeichersystems oder einzelner Komponenten des Druckspeichersystems bedeuten.

Bevorzugt ist das erfindungsgemäße Sperrventil im Durchflußweg der Tankstutzeneinheit unmittelbar nach dem Rückschlagventil angeordnet.

In einer vorteilhaften Ausführungsform der Erfindung ist die Tankstutzeneinheit in das Fahrzeug fest eingebaut, wobei fahrzeugaußenseitig ein Tankstutzen angeordnet ist, der durch die Art des für das Fahrzeug zulässigen Kraftstoffes und/oder einen vorgegebenen Maximaldruck für den für das Fahrzeug zulässigen Kraftstoff festgelegt ist, wobei die Auslassöffnung des in der Tankstutzeneinheit angeordneten Sperrventils über eine Druckleitung mit dem Druckspeichersystem im Fahrzeug verbunden ist, und wobei der Sperrdruck des Sperrventils durch den zulässigen Betriebsdruck des Druckspeichersystems festgelegt ist.

Die Tankstutzeneinheit ist dauerhaft und fest im Bereich der Aussenhülle/Karosserie des Fahrzeugs eingebaut um auch die nachfolgenden zum Druckspeichersystem des Fahrzeuges führenden Druckleitungen vor dem beim Betanken herrschenden Überdruck zu schützen. Sie ist somit auch dem Fahrzeug fix zugeordnet und der auf das eingebaute Druckspeichersystem abgestimmte Tankstutzen und das ebenfalls auf den zulässigen Betriebsdruck des Druckspeichersystems abgestimmte Sperrventil ermöglichen sicheres Betanken ohne Gefahr von Verwechslungen und Irrtümern. Ein fix auf das Fahrzeug bezogener Adapter erhöht massiv die Sicherheit und kann in unterschiedlichen Ausführungen der Anschlüsse für die Tankstellen das Sicherheitspotential auch für Tankstellensysteme in fremden Regionen übernehmen.

In einer weiteren Ausführungsform der Erfindung ist die Tankstutzeneinheit als mobiler Adapter ausgeführt, wobei die Tankstutzeneinheit tankstellenseitig einen Tankstutzen aufweist, wobei dieser Tankstutzen durch die Art des für das Fahrzeug zulässigen Kraftstoffes und durch einen vorgegebenen Maximaldruck des für das Fahrzeug zulässigen Kraftstoffes festgelegt ist, und wobei die Tankstutzeneinheit fahrzeugseitig einen Anschlussstutzen aufweist der durch den Sperrdruck des in der Tankstutzeneinheit angeordneten Sperrventils festgelegt ist.

Die Ausführung als mobiler Adapter ermöglicht das einfache Nachrüsten von Fahrzeugen mit konventionellen Tanksystemen. Dadurch dass der fahrzeugseitige Anschlussstutzen des mobilen Adapters durch den Sperrdruck des im mobilen Adapter angeordneten Sperrventils in seinen mechanischen Abmessungen festgelegt ist und der Tankstutzen einer fest in das Fahrzeug eingebauten konventionellen Tankstutzeneinheit durch den zulässigen Betriebsdruck des im Fahrzeug eingebauten Druckspeichersystems festgelegt ist, wird gewährleistet, dass der mobile Adapter nur an Fahrzeuge angesteckt werden kann, die in Kraftstoffart und zulässigem Betriebsdruck mit dem mobilen Adapter übereinstimmen.
Einen derartigen mobilen Adapter/Tankstutzen kann der Besitzer im Fahrzeug mitführen. Die Sicherheit beim Betanken wird erhöht und regionale Besonderheiten bei Tankstellen können besser berücksichtigt werden.

In einer weiteren vorteilhaften Ausführungsform weist die Tankstutzeneinheit dem Sperrventil im Durchflussweg vorgelagert ein schaltbares Durchflussbegrenzungsventil auf. Mit einem in die Tankstutzeneinheit integrierten Ventil mit definierten und mechanisch oder elektrisch schaltbaren Durchflussöffnungen kann der Druckstoß bei Tankbeginn gedämpft werden. Beim fortgesetzten Tankvorgang werden über den zweiten, größeren Querschnitt kurze Tankzeiten erreicht. Dadurch werden Schäden an Ventilen, Ventilsitzen und Dichtungen durch Druckstöße vermieden.

Das Durchflussbegrenzungsventil weist z.B. zwei Schaltstellungen auf. Beim Betanken kann man, um das Druckspeichersystem oder dessen Komponenten vor etwaigen Druckstößen der Tankstelle zu schützen, mit einem verkleinerten Druckflussquerschnitt des Ventils starten und später, damit das Betanken schneller erfolgen kann, auf den größeren Querschnitt manuell (oder elektrisch) umschalten.

Bevorzugt weist die Tankstutzeneinheit einen mechanisch und/oder elektrisch arbeitenden und optisch wahrnehmbaren Druckindikator auf. Der Adapter ist mit einem optisch wahrnehmbaren Druckindikator ausgestattet, um der betankenden Person zu signalisieren, dass der Drucktank nun voll ist bzw. der zulässige Betriebsdruck des Tanks erreicht ist. In einer weiteren Ausführungsform spricht der optisch wahrnehmbare Druckindikator erst bei Erreichen des Sperrdrucks des Sperrventils an oder weist bei Erreichen des Sperrdrucks sein Anzeigemaximum auf. Dies erhöht das Sicherheitsempfinden der Kunden und Tankwarte beim Betankungsvorgang.

Besonders vorteilhaft ist eine Ausführung in der die Tankstutzeneinheit eine die Art des zulässigen Kraftstoffes und/oder den Sperrdruck des Sperrventiles anzeigende Farbcodierung aufweist. Ausserdem ist es günstig wenn die Tankstutzeneinheit eine die Art des zulässigen Kraft-stoffes und/oder den vorgegebenen Maximaldruck und/oder den Sperrdruck des Sperrventiles anzeigende alphanumerische Kennzeichnung aufweist.

Mit einer zusätzlichen, farblichen Kennzeichnung entsprechend der Treibstoffart und/oder einer definierten Kennzeichnung durch Beschriftung (Buchstaben oder Zahlen) kann eine Erhöhung der Sicherheit beim Betanken erreicht werden.

Die erfindungsgemäßen Sperrventile sind für unterschiedliche Medien wie Wasserstoff, Methan, Erdgas oder ein Gemisch aus Wasserstoff und Erdgas besonders geeignet. Durch entsprechende Modifikationen ist auch eine Verwendung mit Flüssig-Gas (LPG) und anderen flüssigen Medien möglich.

In einer weiteren bevorzugten Ausgestaltung des Tanksystems ist zumindest einem Druckspeicherbehälter zumindest ein von einer Steuereinheit steuerbares elektromagnetisch betätigbares Absperrventil zugeordnet. Das elektromagnetisch betätigbare Absperrventil ist besonders bevorzugt als automatisches Zylinderventil (AZV) ausgebildet.

Ein automatisches Zylinderventil ist ein elektrisch (meist mittels Magnet) angesteuertes Ventil, das geöffnet und geschlossen werden kann. Oft wird es in derartigen Tanksystemen mit "shut-off-valve" oder Gasdrucksperrventil bezeichnet. Elektomagnetisch betätigbare Absperrventile in Ventilanordnungen dienen allgemein dem Öffnen und Schließen von Druckspeicherbehältern. Sie sind üblicherweise so konzipiert, dass sie im stromlosen Zustand ihres Stellmechanismus geschlossen sind. Der hier verwendete Begriff (AZV - automatisches Zylinderventil) kommt aus einer ECE-Richtlinie, welche diesen Begriff für ein derartiges Ventil verwendet. Das AZV kann einen nachgeschalteten Druckspeicherbehälter unabhängig vom anliegenden Druck sperren/öffnen und gewährleistet zusätzliche Sicherheit im Betrieb von Tanksystemen.

Ein "Betankungsvorgang" von mehreren Druckspeicherbehältern umfasst insbesondere den Zeitraum, in dem das hoch verdichtete Gas in die Druckspeicherbehälter gefördert wird. Das "gleichzeitige Betanken", zum Beispiel an einer Zapfsäule einer Erdgasbetankungsanlage (Tankstelle), von mehreren Druckspeicherbehältern steht im Gegensatz zu einem sequentiellen Betanken der Druckspeicherbehälter. So erfolgt das Betanken der mehreren Druckspeicherbehälter über parallele Zuleitungen, die mit einem gemeinsamen Befüll-/Tankstutzen gekoppelt sind, sodass das hoch verdichtete Gas gleichzeitig/parallel den mehreren Druckspeicherbehältern zugeführt werden kann.

### Kurzbeschreibung der Zeichnungen

Die Erfindung wird im Folgenden beispielhaft unter Bezugnahme auf die Zeichnungen beschrieben.
- Fig. 1: zeigt schematisch einen mobilen Tankstutzenadapter in Verbindung mit einer Tankstutzeneinheit in einem konventionellen Druckspeischersystem.
- Fig. 2: zeigt schematisch einen mobilen Tankstutzenadapter mit integriertem Sperrventil und mechanischoptischem Druckanzeiger.
- Fig. 3: zeigt schematisch einen mobilen Tankstutzenadapter mit mehreren integrierten Zusatzeinrichtungen.
- Fig. 4: zeigt schematisch einen fest in ein Fahrzeug eingebauten Tankstutzenadapter mit integriertem Sperrventil und mechanisch-optischem Druckanzeiger.
- Fig. 5: ist eine schematische Darstellung einer Tankstutzeneinheit für ein Fahrzeug mit integriertem Sperrventil und einem Druckspeicherbehälter.
- Fig. 6: ist eine Schnittansicht einer Ausführungsform eines erfindungsgemäßen Sperrventils.
- Fig. 7: ist eine Schnittansicht einer Ausführungsform eines Kolbens für ein erfindungsgemäßes Sperrventil.

### Detaillierte Beschreibung der Erfindung

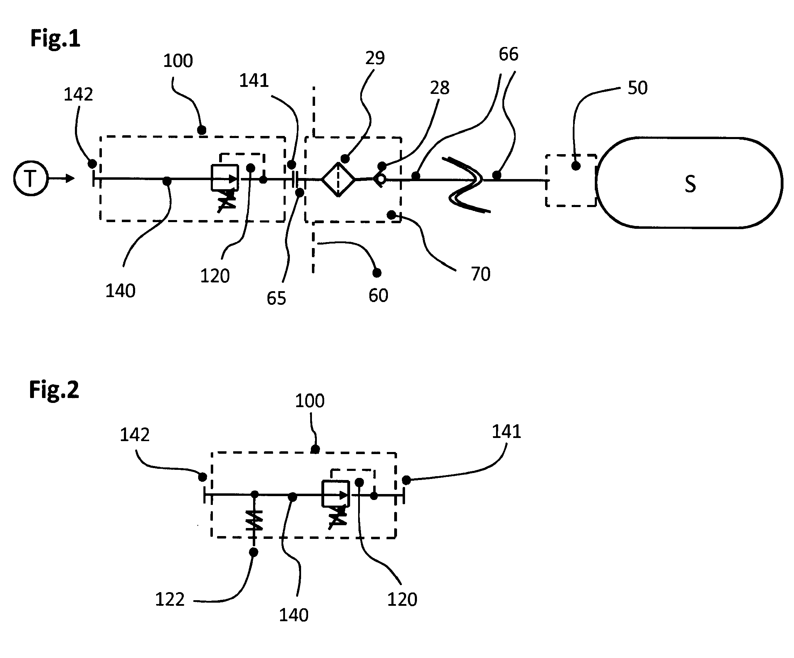

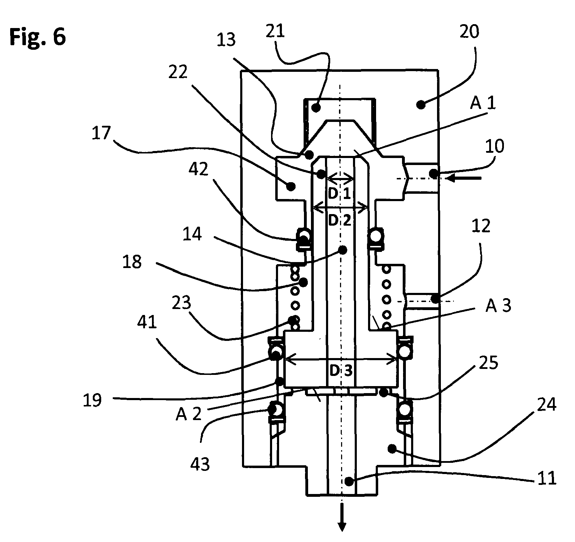

Figur 1 zeigt beispielhaft eine mobile Tankstutzeneinheit 100 in Verbindung mit einer konventionellen Tankstutzeneinheit 70 und einem Druckspeischersystem, die.in einem Kraftfahrzeug im Bereich der Karosserie 60 angeordnet sind. Die Ausgangslage beim Betanken des Systems ist so, dass das im Durchflussweg 140 zwischen dem (mobilen) Tankstutzen 142 und dem (mobilen) Anschlussstutzen 141 angeordnete Sperrventil 120 durch eine Feder 23 (siehe Fig.6) offen gehalten wird. Die mobile Tankstutzeneinheit 100 ist über den Anschlusstutzen 141 an den Tankstutzen 65 der konventionellen Tankstutzeneinheit 70 verbunden. Zum Betanken wird die Zapfeinrichtung einer Tankstelle T mit dem mobilen Tankstutzen 142 verbunden. Kraftstoff/Medium kann nun durch den Durchflussweg 140, das Sperrventil 120, das Filter 29 und das Rückschlagventil 28 über die Druckleitung 66 über einen konventionellen Speicherventilblock 50 in den Druckspeicher S strömen.

In der Figur 2 wird schematisch ein Schaltungsschema für eine mobile Tankstutzeneinheit 100 mit integriertem Druckindikator 122 dargestellt. Der Druckindikator 122, in Fig.2 zwischen Tankstutzen 142 und Sperrventil angeordnet, soll beim Betanken dem Betanker nur signalisieren, dass der Tank nun voll und der zulässige Betriebsdruck des im Fahrzeug angeordneten Druckspeichersystems erreicht ist. Für einen 200 bar Tank wird der Druckindikator beispielsweise auf 195 bar eingestellt und lässt bei diesem Druck sichtbar für den Betanker ein Anzeigeelement ausfahren. Wenn sich also der 200 bar Tank beim Betanken mit einer 700 bar Zapfeinrichtung langsam füllt und der Druck ansteigt, schließt entweder das Drucksperrventil 120, dann steigt der Druck am Druckindikator 122 schlagartig auf 700 bar an oder der Druckindikator ist auf einen kleineren Druck als das Drucksperrventil eingestellt und der Bolzen fährt eben vor dem Schließen des Drucksperrventils aus. Beim Entfernen des Tankrüssels kehrt das Anzeigeelement des Druckindikators 122 wieder in die Ausgangsposition zurück.

Vorteil gegenüber dem Stand der Technik ist, dass momentan am Markt befindliche Tankstutzeneinheiten keine derartige einfache Möglichkeit haben, um dem Betanker zu signalisieren, dass der Tank voll ist. Stand der Technik ist, dass die Tankstelle selbst aufgrund von Druckstößen oder eruierten Druckänderungen in der Betankungsleitung feststellt, dass der Tank nun voll sein müsste. Der Betanker hat dabei keine unmittelbare Anzeige und somit keine direkte Kontrolle ob sein Tank nun voll ist oder nicht.

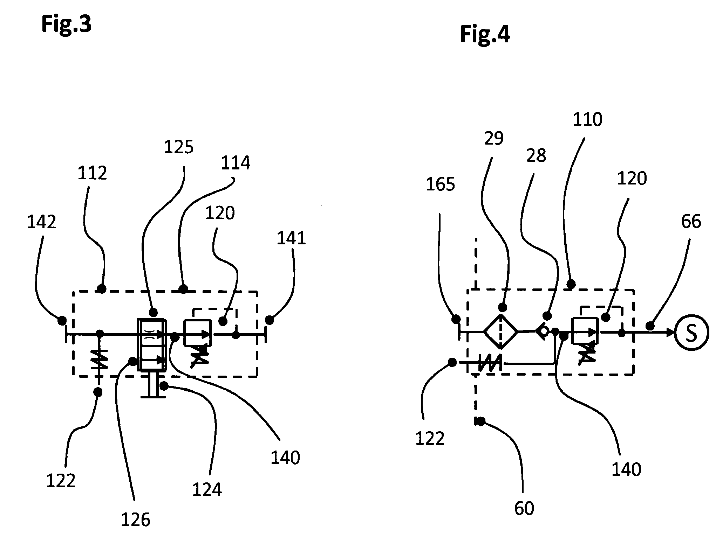

Figur 3 zeigt schematisch eine weitere beispielhafte Ausführungsform einer mobilen Tankstutzeneinheit, wobei in einer funktionalen Einheit (in einem kompakten Gehäuse) ein Druckindikator 122, ein Durchflussbegrenzungsventil 124 und ein Sperrventil 120 integriert angeordnet sind. Der Druckindikator 122 funktioniert wie in Fig.2 beschrieben. Das manuell oder auch elektrisch betätigbare Durchflussbegrenzungsventil 124 ist so ausgeführt, dass in einer ersten Schaltstellung 125 der Durchfluss von Kraftstoff begrenzt wird und somit auch Druckstöße gedämpft werden. In einer zweiten Schaltstellung 126 wird ein größerer Querschnitt für eine rasche Betankung frei gegeben. Außen am schematisch dargestellten Gehäuse zeigt eine farbliche Kennzeichnung 112 am mobilen Adapter den Sperrdruck des eingebauten Sperrventils und/oder den maximal am Tankstutzen und somit auf der Tankstutzeneinheit aufbringbaren Druck sowie die zulässige Kraftstoffart an. Anschlussstutzen 141 und im Fahrzeug fest eingebaute Tankstutzen 65,165 werden durch dasselbe international abgestimmte Kodierungssystem auch farblich gekennzeichnet. Auch eine alphanumerische Kennzeichnung (von Druck und Kraftstoffart) aussen an der mobilen Tankstutzeneinheit ist schematisch angedeutet.

Die in Figur 4 dargestellte Tankstutzeneinheit 110 ist in ein Fahrzeug im Bereich der Karosserie dauerhaft und fest eingebaut. Der neben dem Tankstutzen 165 dargestellte Druckindikator 122 hat dieselbe Funktion wie in der in Fig.3 gezeigten mobilen Tankstutzeneinheit. Hier aber wird der Druckindikator 122 auch nach dem Entfernen der Zapfeinrichtung aufgrund des Rückschlagventils 28 anliegenden Fülldruck anzeigen und das Anzeigeelement ausgefahren bleiben, solange bis aufgrund der Entnahme von Kraftstoff der Druck im Tanksystem unter den Sperrdruck des Sperrventils 120 fällt, dieses öffnet dann und in der Folge vermindert sich auch der Druck am Indikator.

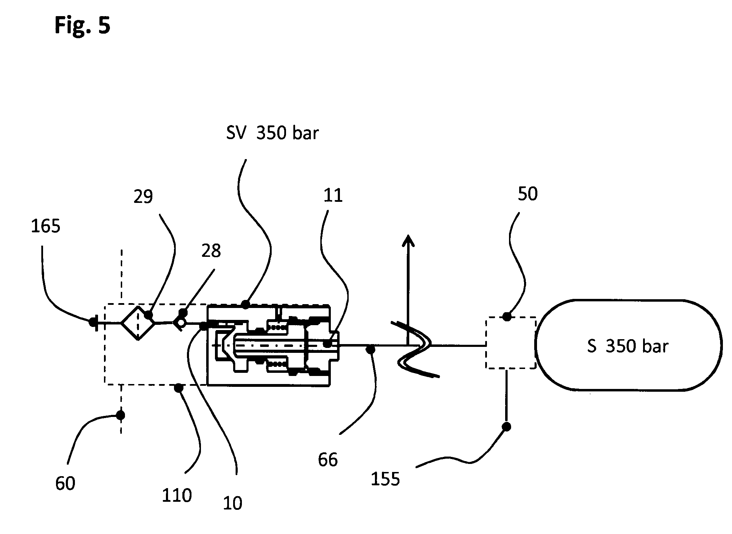

Figur 5 zeigt eine beispielhafte Ausführungsform des Sperrventils SV (Sperrdruck 350 Bar) eingebaut in eine Tankstutzeneinheit 110 in einer Karosserie 60 eines Fahrzeugs. Ein Tankstutzen 165 (nach dem Stand der Technik) legt durch seine mechanischen Abmessungen (Länge, Durchmesser) fest, mit welcher Zapfpistole einer Tankstelle der Tankstutzen 165 verbindbar ist. Dadurch ist das Medium (hier Kraftstoff) das getankt werden kann festgelegt. Der höchstmögliche anlegbare Druck ist der höchste an Tankstellen verfügbare Zapfdruck für den jeweiligen Kraftstoff. Beim Befüllvorgang strömt der Kraftstoff durch ein Filter 29 und ein Rückschlagventil 28 in die hier axial angeordnete Einlassöffnung 10 des für 350 Bar Sperrdruck ausgelegten Sperrventils SV. Von der Auslassöffnung 11 des Sperrventils SV gelangt der Kraftstoff nunmehr mit einem maximalen Druck von 350 Bar über eine Druckleitung 66 und über einen Speicherventilblock 50 (der ein zusätzliches Sicherheitsventil und/oder einen Druckregler zur Entnahme von Medium auf-weisen kann) in einen Druckspeicherbehälter S, der einen zulässigen Betriebsdruck von 350 Bar aufweist. Durch die Abstimmung des Sperrdrucks (350 Bar) des Sperrventils SV auf den zulässigen Betriebsdruck des Druckspeicherbehälters S und die dauerhaft verbundene Anordnung der Komponenten im Fahrzeug ist ein sicheres Betanken unabhängig vom Zapfdruck der Tankstelle gewährleistet. Die Entleerung des Tanksystems erfolgt durch einen im Speicherventilblock 50 integrierten Druckregler und eine Entnahmestelle 155 zu einem Verbraucher. Entnahme von Medium kann auch an einer oder mehreren anderen dem Sperrventil SV nachgeschalteten Stellen im Druckspeichersystem erfolgen.

In der in Figur 6 gezeigten, beispielhaften Ausführungsform ist das erfindungsgemäße Sperrventil 120 im Schnitt dargestellt. In einem Ventilgehäuse 20 ist ein Kolben 22 montiert, der zwei Abschnitte mit unterschiedlichen Außendurchmessern D2, D3 und einen als zentrale Hohlbohrung ausgeführten Verbindungskanal 14 mit dem Innendurchmesser D1 aufweist. Der Kolben 22 stützt sich am Übergang zum größeren Außendurchmesser D3 über die Auflage A3 durch eine Feder 23 am Ventilgehäuse 20 ab, wodurch der Kolben 22 auf Anschlag zum Deckel 24 und dadurch in einem drucklosen Einbauzustand die Durchlassöffnung 13 in geöffneter Stellung gehalten wird.

Der zylindrische Kolben weist in der in Fig. 6 gezeigten Ausführungsform zwei Abschnitte mit unterschiedlichen Außendurchmessern D2 und D3 auf. Ein erster Kolbenabschnitt weist eine normal zur Achse des Kolbens 22 ausgebildete erste Kolbenwirkfläche A1, eine als Fase auf einer Kante des Kolbens ausgebildete Dichtkante 39 und eine erste Gleitfläche mit einem Außendurchmesser D2 auf. Ein zweiter Kolbenabschnitt weist eine zweite Kolbenwirkfläche A2, eine Auflage A3 für die Feder 23 und eine zweite Gleitfläche mit einem Außendurchmesser D3 auf. Der Verbindungskanal 14 ist als axiale Bohrung über die gesamte Länge des Kolbens 22 ausgebildet und weist einen Innendurchmesser D1 auf. Der Verbindungskanal 14 verbindet die zwei Kolbenwirkflächen A1,A2 und wird entsprechend der Ausführungsform des Ventilgehäuses 20 und dem Betriebszustand des Sperrventils von Medium durchströmt.

Der Kolben 22 wird in den beiden Abschnitten mit unterschiedlichen Außendurchmessern D2,D3 von Dichtelementen 41,42 so abgedichtet, dass der Raum mit der Feder 23 zwischen diesen Dichtungen frei durch die Ventilationsöffnung 12 zum Atmosphärendruck atmen kann. Die Dichtelemente 41,42 können wahlweise im Kolben 22 oder wie dargestellt im Ventilgehäuse 20 montiert sein. Die Dichtung 43 dichtet den einstellbaren Deckel 24 gegen das Ventilgehäuse 20 ab.

Bei einem Befüllvorgang, zum Beispiel eines an der Auslassöffnung 11 angeordneten Druckspeicherbehälters, kann Medium durch die Zulauföffnung 10 im Einlassbereich 17 der Ventilkammer über die Durchlassöffnung 13 und durch den Verbindungskanal 14 in den Speicherbereich 19 der Ventilkammer, und in der Folge durch die Auslassöffnung 11 in den nachfolgenden Druckspeicherbehälter S gelangen. Wenn der Druck im Tanksystem so weit ansteigt, dass aufgrund der Kraftverhältnisse durch den anliegenden Druck auf die Kolbenwirkflächen A2 und A1 der Kolben 22 die Federkraft 23 überwindet, wird der Kolben 22 gegen den Dichtkörper 21 geschoben. Das Sperrventil schließt. Dieser Druck entspricht dem Sperrdruck.

Um keine weitere Druckkraft auf den Kolben zu bekommen, ist es daher von Vorteil, wenn der Kolben am äußeren Durchmesser D2 zum Dichtkörper 21 abdichtet. Bei einem Druckanstieg im Einlassbereich 17 bleibt das Sperrventil weiterhin geschlossen, da auf die erste Kolbenwirkfläche A1 die Druckerhöhung nicht mehr wirkt. Wenn der Druck in der Einlassöffnung 10 unter den Druck absinkt bei dem der Kolben geschlossen hat, bleibt das Ventil trotzdem geschlossen, da die Schließkraft durch den Druck in der Auslassöffnung 11 auf die Kolbenwirkfläche A2, abzüglich der Federkraft der Feder 23, bestimmt wird und sich dieser Zustand nicht geändert hat. Somit ist es möglich, auf der Einlassseite 10 Unterdruck aufzubringen, ohne dass das Ventil dadurch öffnet. Die Federkraft der Feder 23 ist mit der Einschraubtiefe des Deckels 24 zusätzlich einstellbar. Um eine gute Druckverteilung auf die zweite Kolbenwirkfläche A2 zu erhalten sind entweder Distanzhalter 25 am Deckel 24 oder entsprechende Freistellungen am Kolben darzustellen.

Ein Öffnen des Sperrventiles SV erfolgt erst, wenn der Druck in der Auslassöffnung 11 dadurch absinkt, dass im nachfolgenden System über eine separate Stelle Medium entnommen wird und dadurch der Druck unter den Sperrdruck absinkt.

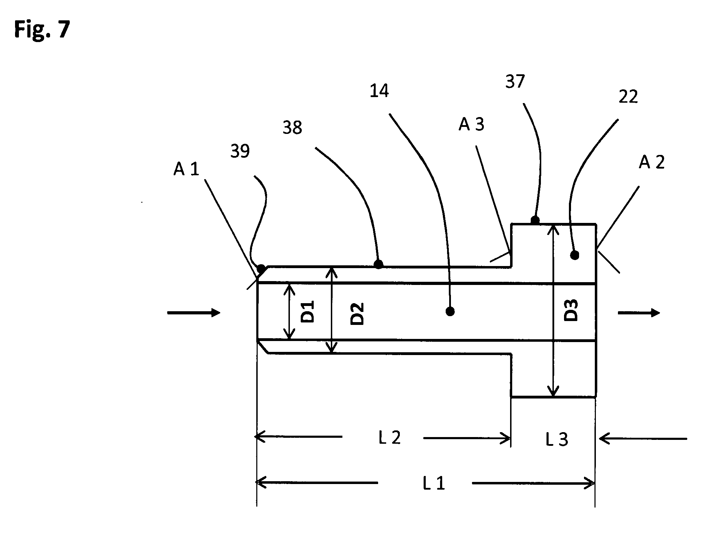

In Figur 7 ist ein Kolben 22 des erfindungsgemäßen Sperrventils exemplarisch im Detail dargestellt. Der zylindrische Kolben mit der Gesamtlänge L1 weist in der gezeigten Ausführungsform zwei Abschnitte mit unterschiedlichen Außendurchmessern D2 und D3 auf. Ein erster Kolbenabschnitt weist eine normal zur Achse des Kolbens 22 ausgebildete erste Kolbenwirkfläche A1, eine als Fase auf einer Kante des Kolbens ausgebildete Dichtkante 39 und eine erste Gleitfläche 38 mit der Länge L3 und einem Außendurchmesser D2 auf. Ein zweiter Kolbenabschnitt weist eine zweite Kolbenwirkfläche A2, eine Auflage A3 für die Feder 23 und eine zweite Gleitfläche 37 mit der Länge L3 und einem Außendurchmesser D3 auf. Der Verbindungskanal 14 ist als axiale Bohrung über die gesamte Länge L1 des Kolbens 22 ausgebildet und weist einen Innendurchmesser D1 auf. Der Verbindungskanal 14 verbindet die zwei Kolbenwirkflächen A1,A2 und wird entsprechend der Ausführungsform des Ventilgehäuses 20 und dem Betriebszustand des Sperrventils von Medium durchströmt.

Bei allen Ausführungsformen , in denen ein Dichtkörper 21 verwendet wird, muss der Dichtkörper 21 zum Ventilgehäuse 20 aus Sicherheitsgründen abgedichtet werden, damit keine zusätzlichen Kräfte entstehen und auf die Dichtkante 39 des Kolbens 22 wirken können.

Die Bezeichnung Fahrzeug umfasst in dieser Patentschrift beispielsweise Kraftfahrzeuge, Schienenfahrzeuge, sowie Wasser- und Luftfahrzeuge. Alle angegebenen Druckwerte sind beispielhaft und führen zu keiner Einschränkung der Erfindung und des Druckbereiches für den die Erfindung beansprucht wird.

### Bezugszeichenliste

- 10: Zulauföffnung
- 11: Auslassöffnung
- 12: Entlastungsöffnung
- 13: Durchlassöffnung
- 14: Verbindungskanal
- 17: Ventilkammer Einlassbereich
- 18: Ventilkammer Entlastungsbereich
- 19: Ventilkammer Speicherbereich
- 20: Ventilgehäuse
- 21: Dichtkörper
- 22: Kolben
- 23: Feder
- 24: Deckel
- 25: Distanzhalter
- 28: Rückschlagventil
- 29: Filter
- 37,38: Gleitflächen
- 39: Dichtkante
- 41,42,43: Dichtelemente
- 50: Speicherventilblock mit Druckregler
- 60: Fahrzeugkarosserie
- 65: Tankstutzen (Stand der Technik)
- 66: Druckleitungen
- 70: Tankstutzeneinheit (Stand der Technik)
- 100: Tankstutzeneinheit mobil
- 110: Tankstutzeneinheit (in Fahrzeug eingebaut)
- 112: Farbliche Kennzeichnung
- 114: Alphanumerische Kennzeichnung
- 120: (mechanisches) Sperrventil (SV)
- 122: Optischer Druckindikator
- 124: Durchflussbegrenzungsventil
- 125: Schaltstellung "begrenzt"
- 126: Schaltstellung "offen"
- 140: Durchflussweg
- 141: Anschlussstutzen (mobil)
- 142: Tankstutzen (mobil)
- 155: Entnahmestelle
- 165: Tankstutzen
- A1,A2: Kolbenwirkflächen
- A3: Auflage
- D1: Innendurchmesser Verbindungskanal
- D2,D3: Aussendurchmesser Kolbenteilabschnitte
- S: Druckspeicherbehälter
- SV: Sperrventil
- T: Tankstelle (Zapfeinrichtung)

## Patentansprüche

1. Tankstutzeneinheit (100,110) für ein Fahrzeug, umfassend einen Tankstutzen (142,165), einen Durchflussweg (140) und ein Rückschlagventil (28),
**dadurch gekennzeichnet, dass**
der Tankstutzen (142,165) für einen vorgegebenen Maximaldruck eingerichtet ist der höher ist als ein zulässiger Betriebsdruck eines im Fahrzeug angeordneten Druckspeichersystems und die Tankstutzeneinheit (100,110) ein Sperrventil (SV,120) aufweist, wobei das Sperrventil (SV, 120) im Durchflussweg (140) zwischen dem Tankstutzen (142,165) und einem Auslassbereich der Tankstutzeneinheit (100,110) angeordnet ist und dazu eingerichtet ist, das im Fahrzeug angeordnete Druckspeichersystem gegen Druckanstieg über seinen zulässigen Betriebsdruck hinaus zu schützen.

2. Tankstutzeneinheit (100,110) nach Anspruch 1,
**dadurch gekennzeichnet, dass**
das Sperrventil (SV,120) ein Ventilgehäuse (20) eine Ventilkammer mit einer Zulauföffnung (10) und einer zumindest einem Druckspeicherbehälter (S) zugewandten Auslassöffnung (11), einen beweglichen Kolben (22), und zumindest eine Feder (23) aufweist, wobei der Kolben (22) zumindest einen axialen Verbindungskanal (14) aufweist und durch zumindest zwei in der Ventilkammer angeordnete Dichtelemente (41,42) axial beweglich geführt ist, wobei eine einem Einlassbereich (17) der Ventilkammer zugewandte erste Kolbenwirkfläche (A1) des Kolbens (22) und ein Dichtkörper (21) oder ein Ventilgehäuse (20) einen Ventilsitz bilden, und wobei durch Änderung des Druckes in einem an eine zweite Kolbenwirkfläche (A2) angrenzenden Speicherbereich (19) der Ventilkammer der Kolben (22) axial bewegbar ist und eine zwischen der Zulauföffnung (10) und der Auslassöffnung (11) angeordnete Durchlassöffnung (13) reversibel verschlossen und geöffnet werden kann, wobei die Durchlassöffnung (13) in drucklosem Zustand durch die Feder (23) offen gehalten wird.

3. Tankstutzeneinheit (100,110) nach Anspruch 2,
**dadurch gekennzeichnet, dass**
die erste Kolbenwirkfläche (A1) und der Dichtkörper (21) oder das Ventilgehäuse (20) des Sperrventils (SV, 120) so ausgebildet sind, dass in einer Schließposition des Kolbens (22) eine Dichtwirkung an einer Dichtkante (39) im Bereich des äußeren Randes der ersten Kolbenwirkfläche (A1) auftritt.

4. Tankstutzeneinheit (100,110) nach einem der Ansprüche 2 bis 3,
**dadurch gekennzeichnet, dass**
ein Sperrdruck des Sperrventils (SV, 120) im Wesentlichen durch die Federkraft der Feder (23) und die Kolbenwirkflächen (A1, A2) bestimmt ist.

5. Tankstutzeneinheit (100,110) nach einem der vorhergehenden Ansprüche,
**dadurch gekennzeichnet, dass**
die Tankstutzeneinheit (100,110) ein Sperrventil (SV, 120) und ein Überdruckventil umfasst, wobei diese Ventile vorzugsweise in einem gemeinsamen Ventilgehäuse angeordnet sind.

6. Tankstutzeneinheit (100,110) nach einem der vorhergehenden Ansprüche,
**dadurch gekennzeichnet, dass**
das Sperrventil (SV,120) in der Tankstutzeneinheit (100,110) im Durchflußweg (140) unmittelbar nach dem Rückschlagventil (28) angeordnet ist.

7. Tankstutzeneinheit (110) nach einem der vorhergehenden Ansprüche,
**dadurch gekennzeichnet, dass**
die Tankstutzeneinheit (110) in das Fahrzeug fest eingebaut ist, wobei fahrzeugaußenseitig ein Tankstutzen (165) angeordnet ist, der durch die Art des für das Fahrzeug zulässigen Kraftstoffes und einen vorgegebenen Maximaldruck für den für das Fahrzeug zulässigen Kraftstoff festgelegt ist, wobei die Auslassöffnung (11) des in der Tankstutzeneinheit (110) angeordneten Sperrventils (SV, 120) über eine Druckleitung (66) mit dem im Fahrzeug angeordneten Druckspeichersystem verbunden ist, und wobei der Sperrdruck des Sperrventils (SV, 120) durch den zulässigen Betriebsdruck des im Fahrzeug angeordneten Druckspeichersystems festgelegt ist.

8. Tankstutzeneinheit (100) nach einem der Ansprüche 1 bis 6,
**dadurch gekennzeichnet, dass**
die Tankstutzeneinheit (100) als mobiler Adapter ausgeführt ist, wobei die Tankstutzeneinheit (100) tankstellenseitig einen Tankstutzen (142) aufweist, wobei dieser Tankstutzen (142) durch die Art des für das Fahrzeug zulässigen Kraftstoffes und durch einen vorgegebenen Maximaldruck des für das Fahrzeug zulässigen Kraftstoffes festgelegt ist, und wobei die Tankstutzeneinheit (100) fahrzeugseitig einen Anschlussstutzen (141) aufweist der durch den Sperrdruck des in der Tankstutzeneinheit (100) angeordneten Sperrventils (SV, 120) festgelegt ist.

9. Tankstutzeneinheit (100,110) nach einem der vorhergehenden Ansprüche,
**dadurch gekennzeichnet, dass**
die Tankstutzeneinheit (100,110) dem Sperrventil (120) im Durchflussweg (140) vorgelagert ein schaltbares Durchflussbegrenzungsventil (124) aufweist.

10. Tankstutzeneinheit (100,110) nach einem der vorhergehenden Ansprüche,
**dadurch gekennzeichnet, dass**
die Tankstutzeneinheit (100,110) einen mechanisch und/oder elektrisch arbeitenden und optisch wahrnehmbaren Druckindikator (122) aufweist.

11. Tankstutzeneinheit (100,110) nach Anspruch 10,
**dadurch gekennzeichnet, dass**
der optisch wahrnehmbare Druckindikator (122) erst bei Erreichen des Sperrdrucks des Sperrventils (120) anspricht oder sein Anzeigemaximum aufweist.

12. Tankstutzeneinheit (100,110) nach einem der vorhergehenden Ansprüche,
**dadurch gekennzeichnet, dass**
die Tankstutzeneinheit (100,110) eine die Art des zulässigen Kraftstoffes und/oder den Sperrdruck des Sperrventiles anzeigende Farbcodierung (112) aufweist.

13. Tankstutzeneinheit (100,110) nach einem der vorhergehenden Ansprüche,
**dadurch gekennzeichnet, dass** die Tankstutzeneinheit (100,110) eine die Art des zulässigen Kraftstoffes und/oder den vorgegebenen Maximaldruck und/oder den Sperrdruck des Sperrventiles anzeigende alphanumerische Kennzeichnung (114) aufweist.

14. Tanksystem für ein Fahrzeug umfassend eine Tankstutzeneinheit (100,110), Druckleitungen (66) und zumindest einen Druckspeicherbehälter (S) nach einem der vorhergehenden Ansprüche.

## Claims

1. Tank neck unit (100, 110) for a vehicle, comprising a tank neck (142, 165), a throughflow path (140) and a nonreturn valve (28),
**characterized in that** the tank neck (142, 165) is designed for a predetermined maximum pressure which is higher than a permissible operating pressure of a pressure accumulator system arranged in the vehicle, and the tank neck unit (100, 110) has a shut-off valve (SV, 120), wherein the shut-off valve (SV, 120) is arranged in the throughflow path (140) between the tank neck (142, 165) and an outlet region of the tank neck unit (100, 110) and is designed to protect the pressure accumulator system arranged in the vehicle against a rise in pressure beyond the permissible operating pressure thereof.

2. Tank neck unit (100, 110) according to Claim 1,
**characterized in that** the shut-off valve (SV, 120) has a valve housing (20), a valve chamber with an intake opening (10) and an outlet opening (11) facing at least one pressure accumulator vessel (S), a moveable piston (22) and at least one spring (23), wherein the piston (22) has at least one axial connecting channel (14) and is guided in an axially moveable manner by at least two sealing elements (41, 42) arranged in the valve chamber, wherein a first effective piston surface (A1) of the piston (22), which effective piston surface faces an inlet region (17) of the valve chamber, and a sealing body (21) or a valve housing (20) form a valve seat, and wherein, by changing the pressure in an accumulator region (19) of the valve chamber, said accumulator region being adjacent to a second effective piston surface (A2), the piston (22) is axially moveable and a passage opening (13) arranged between the intake opening (10) and the outlet opening (11) can be reversibly closed and opened, wherein, in the unpressurized state, the passage opening (13) is kept open by the spring (23).

3. Tank neck unit (100, 110) according to Claim 2,
**characterized in that** the first effective piston surface (A1) and the sealing body (21) or the valve housing (20) of the shut-off valve (SV, 120) are designed in such a manner that, in a closed position of the piston (22), a sealing effect occurs at a sealing edge (39) in the region of the outer border of the first effective piston surface (A1).

4. Tank neck unit (100, 110) according to either of Claims 2 and 3,
**characterized in that** a shut-off pressure of the shut-off valve (SV, 120) is substantially determined by the spring force of the spring (23) and the effective piston surfaces (A1, A2).

5. Tank neck unit (100, 110) according to one of the preceding claims,
**characterized in that** the tank neck unit (100, 110) comprises a shut-off valve (SV, 120) and a pressure control valve, wherein said valves are preferably arranged in a common valve housing.

6. Tank neck unit (100, 110) according to one of the preceding claims,
**characterized in that** the shut-off valve (SV, 120) is arranged in the tank neck unit (100, 110) in the throughflow path (140) directly downstream of the nonreturn valve (28).

7. Tank neck unit (110) according to one of the preceding claims,
**characterized in that** the tank neck unit (110) is fixedly fitted into the vehicle, wherein a tank neck (165) is arranged on the outside of the vehicle, said tank neck being defined by the type of fuel permissible for the vehicle and by a predetermined maximum pressure for the fuel permissible for the vehicle, wherein the outlet opening (11) of the shut-off valve (SV, 120) arranged in the tank neck unit (110) is connected via a pressure line (66) to the pressure accumulator system arranged in the vehicle, and wherein the shut-off pressure of the shut-off valve (SV, 120) is defined by the permissible operating pressure of the pressure accumulator system arranged in the vehicle.

8. Tank neck unit (100) according to one of Claims 1 to 6,
**characterized in that** the tank neck unit (100) is designed as a mobile adapter, wherein the tank neck unit (100) has a tank neck (142) on the filling-station side, wherein said tank neck (142) is defined by the type of fuel permissible for the vehicle and by a predetermined maximum pressure of the fuel permissible for the vehicle, and wherein the tank neck unit (100) has, on the vehicle side, a connector (141) which is defined by the shut-off pressure of the shut-off valve (SV, 120) arranged in the tank neck unit (100).

9. Tank neck unit (100, 110) according to one of the preceding claims,
**characterized in that** the tank neck unit (100, 110) has a switchable throughflow-limiting valve (124) mounted in the throughflow path (140) upstream of the shut-off valve (120).

10. Tank neck unit (100, 110) according to one of the preceding claims,
**characterized in that** the tank neck unit (100, 110) has a pressure indicator (122) operating mechanically and/or electrically and being visually perceptible.

11. Tank neck unit (100, 110) according to Claim 10,
**characterized in that** the visually perceptible pressure indicator (122) responds or is at its indicating maximum only when the shut-off pressure of the shut-off valve (120) is reached.

12. Tank neck unit (100, 110) according to one of the preceding claims,
**characterized in that** the tank neck unit (100, 110) has a colour coding means (112) indicating the type of permissible fuel and/or the shut-off pressure of the shut-off valve.

13. Tank neck unit (100, 110) according to one of the preceding claims,
**characterized in that** the tank neck unit (100, 110) has an alpha-numerical identification means (114) indicating the type of permissible fuel and/or the predetermined maximum pressure and/or the shut-off pressure of the shut-off valve.

14. Tank system for a vehicle, comprising a tank neck unit (100, 110), pressure lines (66) and at least one pressure accumulator vessel (S) according to one of the preceding claims.

## Revendications

1. Unité de manchon de citerne (100, 110) pour un véhicule automobile, comprenant un manchon de citerne (142, 165), un parcours d'écoulement (140) et une soupape anti retour (28),
**caractérisée en ce que**
le manchon de citerne (142, 165) est conçu pour une pression maximale prescrite qui est supérieure à une pression de fonctionnement autorisée d'un système d'accumulation de pression disposé dans le véhicule et l'unité de manchon de citerne (100, 110) présente un clapet anti retour (SV, 120), dans laquelle le clapet anti retour (SV, 120) est disposé dans le parcours d'écoulement (140) entre le manchon de citerne (142, 165) et une zone d'évacuation de l'unité de manchon de citerne (100, 110) et est conçu afin de protéger le système d'accumulateur de pression disposé dans le véhicule contre une augmentation de pression supérieure à sa pression de fonctionnement autorisée.

2. Unité de manchon de citerne (100, 110) selon la revendication 1, **caractérisée en ce que** le clapet anti retour (SV, 120) présente un logement de soupape (20), une chambre de soupape avec une ouverture d'amenée (10) et une ouverture d'évacuation (11) tournée vers au moins un récipient d'accumulateur de pression (S), un piston mobile (22) et au moins un ressort (23), dans laquelle le piston (22) présente au moins un canal de liaison axiale (14) et est guidé de manière déplaçable axialement à travers au moins deux éléments d'étanchéité (41, 42) disposés dans la chambre de soupape, dans laquelle une première surface opérationnelle de piston (A1) du piston (22) tournée vers une zone d'introduction (17) de la chambre de soupape et un corps d'étanchéité (21) ou un logement de soupape (20) forment un siège de soupape et dans laquelle en variant la pression dans une zone d'accumulateur (19) de la chambre de soupape contiguë à une deuxième surface opérationnelle de piston (A2) le piston (22) est déplaçable axialement et une ouverture traversante (13) disposée entre l'ouverture d'amenée (10) et l'ouverture d'évacuation (11) peut être fermée et ouverte de manière réversible, dans laquelle l'ouverture traversante (13) est maintenue ouverte par le ressort (23) en l'état hors pression.

3. Unité de manchon de citerne (100, 110) selon la revendication 2, **caractérisée en ce que** la première surface opérationnelle du piston (A1) et le corps d'étanchéité (21) ou le logement de soupape (20) du clapet anti retour (SV, 120) sont conçus de telle sorte que dans une position de fermeture du piston (22) une action d'étanchéité sur une arête d'étanchéité (39) au niveau du bord extérieur de la première surface opérationnelle du piston (A1) se produise.

4. Unité de manchon de citerne (100, 110) selon une des revendications 2 à 3, **caractérisée en ce qu'**une pression de barrage du clapet anti retour (SV, 120) est déterminée essentiellement par la force de ressort du ressort (23) et les surfaces opérationnelles de piston (A1, A2).

5. Unité de manchon de citerne (100, 110) selon une des revendications précédentes, **caractérisée en ce que** l'unité de manchon de citerne (100, 110) comprend un clapet anti retour (SV, 120) et une soupape de surpression, dans laquelle ces soupapes sont disposées de préférence dans un logement de soupape commun.

6. Unité de manchon de citerne (100, 110) selon une des revendications précédentes, **caractérisée en ce que** le clapet anti retour (SV, 120) est disposé dans l'unité de manchon de citerne (100, 110) dans le parcours d'écoulement (140) directement après la soupape anti retour (28).

7. Unité de manchon de citerne (110) selon une des revendications précédentes, **caractérisée en ce que** l'unité de manchon de citerne (110) est montée solidement dans le véhicule, dans laquelle du côté extérieur du véhicule un manchon de citerne (165) est disposé, qui est déterminé par le type de carburant autorisé pour le véhicule et une pression maximale prescrite pour le carburant autorisé pour le véhicule, dans laquelle l'ouverture d'évacuation (11) du clapet anti retour (SV, 120) disposé dans l'unité de manchon de citerne (110) est reliée par l'intermédiaire d'une conduite pressurisée (66) avec le système d'accumulateur de pression disposé dans le véhicule et dans laquelle la pression de barrage du clapet anti retour (SV, 120) est déterminée par la pression de fonctionnement autorisée du système d'accumulateur de pression disposé dans le véhicule.

8. Unité de manchon de citerne (100) selon une des revendications 1 à 6, **caractérisée en ce que** l'unité de manchon de citerne (100) est réalisée comme un adaptateur mobile, dans laquelle l'unité de manchon de citerne (100) présente du côté de la citerne un manchon de citerne (142), dans laquelle ce manchon de citerne (142) est déterminé par le type du carburant autorisé pour le véhicule et par une pression maximale prescrite du carburant autorisé pour le véhicule et dans laquelle l'unité de manchon de citerne (100) présente du côté du véhicule un manchon de raccordement (141) qui est immobilisé par la pression de barrage du clapet anti retour (SV, 120) disposé dans l'unité de manchon de citerne (100).

9. Unité de manchon de citerne (100, 110) selon une des revendications précédentes, **caractérisée en ce que** l'unité de manchon de citerne (100, 110) présente une soupape de limitation d'écoulement (124) commutable positionnée avant le clapet anti retour (120) dans le parcours d'écoulement (140).

10. Unité de manchon de citerne (100, 110) selon une des revendications précédentes, **caractérisée en ce que** l'unité de manchon de citerne (100, 110) présente un indicateur de pression (122) perceptible optiquement et fonctionnant mécaniquement et/ou électriquement.

11. Unité de manchon de citerne (100, 110) selon la revendication 10, **caractérisée en ce que** l'indicateur de pression perceptible optiquement (122) commence à fonctionner ou présente son affichage maximal seulement lorsque la pression de barrage du clapet anti retour (120) est atteinte.

12. Unité de manchon de citerne (100, 110) selon une des revendications précédentes, **caractérisée en ce que** l'unité de manchon de citerne (100, 110) présente un codage coloré (112) affichant le type de carburant autorisé et/ou la pression de barrage du clapet anti retour.

13. Unité de manchon de citerne (100, 110) selon une des revendications précédentes, **caractérisée en ce que** l'unité de manchon de citerne (100, 110) présente un marquage (114) alphanumérique affichant le type de carburant autorisé et/ou la pression maximale autorisée et/ou la pression de barrage du clapet anti retour.

14. Système de réservoir pour un véhicule comprenant une unité de manchon de citerne (100, 110), des conduites pressurisées (66) et au moins un récipient d'accumulateur de pression (S) selon une des revendications précédentes.
